**Europäisches Patentamt**

**European Patent Office**

**Office européen des brevets**

(11) Veröffentlichungsnummer : **0 340 454 B1**

# EUROPÄISCHE PATENTSCHRIFT

(45) Veröffentlichungstag der Patentschrift :
09.10.91 Patentblatt 91/41

(51) Int. Cl.$^5$ : **B60Q 1/04**

(21) Anmeldenummer : **89105696.2**

(22) Anmeldetag : **31.03.89**

(54) Scheinwerfer für Kraftfahrzeuge.

(30) Priorität : **28.04.88 DE 3814289**

(43) Veröffentlichungstag der Anmeldung :
**08.11.89 Patentblatt 89/45**

(45) Bekanntmachung des Hinweises auf die
Patenterteilung :
**09.10.91 Patentblatt 91/41**

(84) Benannte Vertragsstaaten :
**DE ES FR GB IT**

(56) Entgegenhaltungen :
**GB-A- 2 182 751**
**US-A- 4 713 739**
**US-A- 4 731 707**

(73) Patentinhaber : **ROBERT BOSCH GmbH**
**Postfach 10 60 50**
**W-7000 Stuttgart 10 (DE)**

(72) Erfinder : **Dobler, Karl-Otto**
**Lahnstrasse 5**
**W-7410 Reutlingen 25 (DE)**

## Beschreibung

### Stand der Technik

Die Erfindung betrifft einen Scheinwerfer für Kraftfahrzeuge nach der Gattung des Anspruchs 1. Ein derartiger Scheinwerfer ist aus DE-A-3525618 bekannt. Bei diesem Scheinwerfer besteht das Winkelgetriebe aus einem Einstell- und Antriebskegelzahnrad, die beide in einem Gehäuse untergebracht sind, das mit einem Lagerdeckel verschlossen ist. Der Lagerdeckel ist mit einer Bohrung und mit einem halbrundförmigen Bund versehen. In der Bohrung dreht ein zylindrischer Ansatz des Antriebskegelzahnrads, das auch durch den Lagerdeckel in axialer Richtung gesichert ist. Der halbrundförmige Bund des Lagerdeckels greift in eine Ringnut des Einstellkegelzahnrads und sichert dieses gegen axiales Verschieben. Der Lagerdeckel ist für die aufwendige Montage mit Fixiereinrichtungen versehen, damit die Zuordnung der beiden Kegelräder zueinander stimmt. Zur Sicherung der Zuordnung beider Kegelräder werden die Lagerdeckelschrauben gegen Drehen durch Verstemmen gesichert.

### Vorteile der Erfindung

Anspruch 1 gibt eine vorteilhafte Ausgestaltung des Scheinwerfers an, bei dem das Einstellkegelzahnrad durch eine selbstsichernde Anordnung gegen axiales Verschieben gesichert ist, ohne daß Schrauben durch Verstemmen oder Befestigen gegen Verdrehen gesichert werden müssen.

Mit Anspruch 2 wird ein Weg aufgezeigt, wie es durch die Anordnung des Einstellkegelzahnrads zum Antriebskegelzahnrad zu einer fixierten Lagerung des Antriebskegelzahnrads kommt, bei der kein Getriebekasten und -deckel erforderlich sind.

Anspruch 3 gibt eine weitere Alternative einer einfachen axialen Sicherung des Einstellkegelzahnrads an. Die Ansprüche 4, 5, 6 zeigen Wege auf, wie das Einstellkegelzahnrad durch ein einfaches Eindrücken in ein bewegliches Element ohne jede weitere Montagearbeit und ohne weitere Sicherungsmaßnahmen in einem Gehäuse fixierbar ist und dabei die Lagerung des Antriebskegelzahnrads mit einer axialen Fixierung desselben vervollständigt wird.

Die weiteren Unteransprüche zeigen vorteilhafte Ausgestaltungen des beweglichen Elements, das durch seine Anordnung am Betätigungselement und durch seinen konstruktiven Ausbau zu einem unproblematischen Zusammenbau führt.

Ansprüche 11 und 12 zeigen, daß es durch eine vorteilhafte Anordnung des Einstellkegelzahnrads zum Antriebskegelzahnrad ohne besonderen Sicherungsaufwand zu einer fixierten unverrückbaren Lage beider Kegelräder zueinander kommt.

### Zeichnung

Ein Ausführungsbeispiel der Erfindung ist in der Zeichnung dargestellt und in der Figurenbeschreibung näher erläutert. Es zeigen :

Figur 1 die Draufsicht auf das Winkelgetriebe mit dem schwenkbar gelagerten Reflektor und der Schwenkanordnung in raumbildlicher Darstellung ;

Figur 2 einen Längsschnitt durch das Winkelgetriebes mit Betätigungselement und

Figur 3 einen Schnitt III-III durch Figur 2.

### Beschreibung des Ausführungsbeispiels

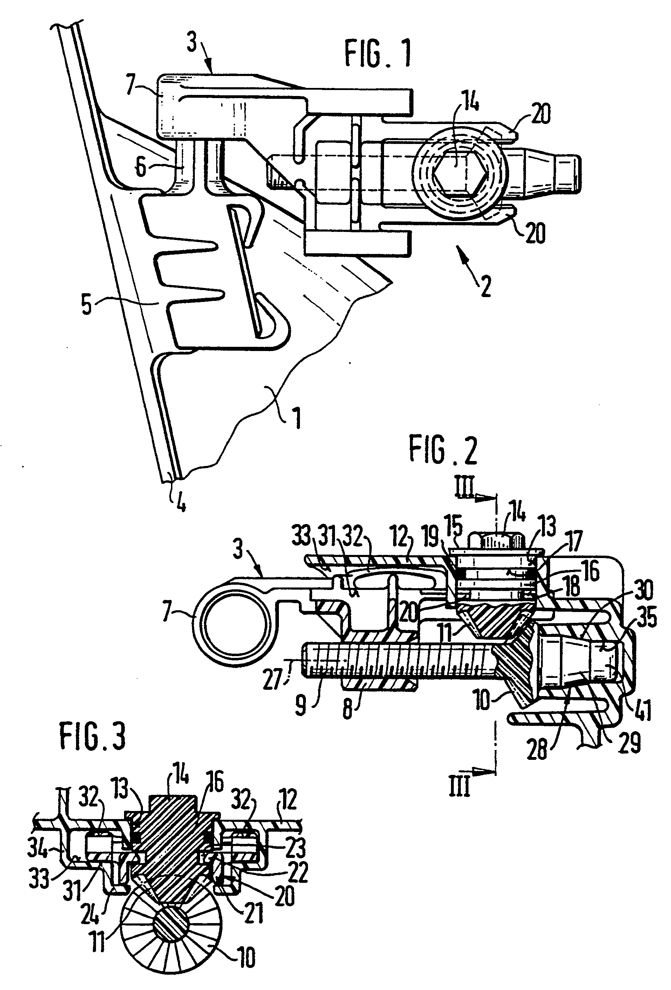

Figur 1 zeigt einen Reflektor 1, der in einem nicht näher dargestellten in einer Karosserie angeordneten Scheinwerfer gelagert ist und in bezug auf die Lage mittels einer Einstellvorrichtung 2 veränderbar ist. Dabei kann entweder der gesamte Scheinwerfer oder nur der Reflektor allein geschwenkt werden. Die Einstellvorrichtung 2 ist mit einem Betätigungselement 3 versehen, das seinerseits unmittelbar oder mittelbar eine Verbindung zum Reflektor 1 hat. Diese Verbindung kann aus einem am Reflektorrand 4 angeordneten Verbindungselement 5 bestehen, an das ein Stift 6 oder ein Kugelkopf angebracht ist, über den eine Kugelpfanne oder ein büchsenförmiges Teil 7, das mit dem Betätigungselement 3 verbunden ist, gestülpt wird. Am Betätigungselement 3 ist eine in Figur 2 erkennbare Gewindebuchse 8 mit Innengewinde angeordnet. In dieses Innengewinde wird ein mit Gewinde versehenes Schraubteil 9 eines Antriebskegelzahnrads 10 eingeschraubt. Das Antriebskegelzahnrad 10 bildet zusammen mit einem Einstellkegelzahnrad 11 ein Winkelgetriebe, wobei die beiden Kegelzahnräder in einem zum Betätigungshebel 3 hin offenen Gehäuse gelagert sind. Das Einstellkegelzahnrad 11 wird zur Lagerung in eine im Gehäuse 12 vorgesehene Bohrung 13 eingeschoben. An der einen, in den Motorraum ragenden Seite ist am Einstellkegelzahnrad 11 ein Außensechskant 14 angebracht. Nach dem Außensechskant 14 des Einstellkegelzahnrads 11 ist ein Anlaufbund 15 angeordnet, der an der Außenseite des Gehäuses 12 anliegt. Dem Anlaufbund 15 schließt sich ein zylindrischer, in der Bohrung 13 gelagerter Teil 16 an, in den eine erste Ringnut 17 und eine zweite Ringut 18 eingebracht sind. Die erste Ringnut 17 ist so angeordnet, daß sie sich nach dem Einfügen des Einstellkegelzahnrads 11 in die Bohrung 13 etwa Mitte der Bohrungstiefe der Bohrung 13 befindet. In diese erste Ringnut 17 wird ein O-Ring 19 eingelegt, der durch Anlage an den zylindrischen Teil der Bohrung 13 den Innenraum des Gehäuses 12 des Winkelgetriebes abdichtet. Dieser O-Ring 19 führt auch zu einer Verspannung zwischen Einstellkegelzahnrad 11 und Bohrung 13 und erhöht damit die bereits durch das Einstellkegelzahnrad 11, Betätigungselement 3 und Schraubteil 9 gebildete selbstsichernde Anordnung dieser Teile. Der ersten Ringnut 17 folgt die zweite Ringnut 18. Der zylindrische Teil 16 geht schließlich in die Verzahnung des Einstellkegelzahnrads 11 mit bestimmtem Kegelwinkel über.

In die zweite Ringnut 18 des Einstellkegelzahnrads 11 greift zu dessen Fixierung in der Bohrung 13 wenigstens ein bewegliches Element 20 ein, das als seitlich federnde und somit bewegliche Leiste ausgebildet ist, die einstückig mit dem Betätigungselement 3 verbunden ist, parallel zur Achse 27 des Schraubteils 9 bzw. des Antriebskegelzahnrads 10 verläuft und sich in Achsrichtung der Bohrung 13 an im Gehäuse 12 vorgesehenen Führungsbahnen 24 abstützt. Dabei wird die Leiste zusätzlich durch die Relativbewegung des Betätigungselements 3 zum Schraubteil 9 bewegt bzw. im Gehäuse 12 und in der Ringnut 18 verschoben. Das bewegliche Element 20 kann auch als eine in das Gehäuse 12 und die zweite Ringnut 18 einschiebbare, federnde Leiste ausgebildet sein, die nicht mit dem Betätigungselement 3 verbunden ist. Vorteilhaft ist jedoch die Verbindung der Leiste 20 oder der Leisten 20 mit dem Betätigungselement 3, da damit eine zusätzliche Lagesicherung der Leiste/n entfällt. Die Leiste kann aber auch als starre, nicht federnde Leiste ausgeführt sein, die mit dem Betätigungselement 3 verbunden ist. In diesem Fall wird zuerst das Einstellkegelzahnrad 11 in die Bohrung 13 eingeführt und dann werden die Leisten 20 durch Verstellen des Betätigungselements 3 auf dem Schraubteil 9 in das Gehäuse 12 eingeschoben. Sind die Leisten 20 federn ausgebildet, können sie auch vor dem Einführen des Einstellkegelzahnrads 11 in die Bohrung 13 eingefügt werden. Zur besseren Fixierung des Einstellkegelzahnrads 11 können auch zwei bewegliche Elemente 20 in die Ringnut 18 eingreifen, die dann vorzugsweise einstückig mit dem Betätigungselement 3 verbunden sind und parallel gabelförmig vom Betätigungselement 3 abstehen. Die beweglichen Elemente, wenn sie als federnde Leisten 20 ausgebildet sind, haben im Gehäuse 12 die notwendigen, von der Mittelachse des Einstellkegelzahnrads 11 radial nach außen gehenden Freiraum, so daß, wenn das Einstellkegelzahnrad 11 in die Bohrung 13 eingeführt wird, die beweglichen Elemente 20 seitlich auslenken können und anschließend in die Ringnut 18 einschnappen können. Die beweglichen Elemente 20 bestehen aus Leisten mit einem, die Stabilität erhöhenden Winkelprofil, das aus einem langen Schenkel 21 und einem kurzen, in die Ringnut 18 eingreifenden Schenkel 22 besteht. Der kurze Schenkel 22 ist mit einer zum einzuführenden Einstellkegelzahnrad 11 weisenden Fase 23 versehen, durch die der Einschiebvorgang des Einstellkegelzahnrads 11 erleichtert wird. Das wird auch dadurch gefördert, daß die Fase 23 parallel zum Kegelwinkel des Einstellkegelzahnrads 11 verläuft. Damit die beweglichen Elemente 20 sich beim Einschieben des Einstellkegelzahnrads 11 nicht in Längsrichtung der Bohrungsmittelachse wegdrücken, sind am Gehäuse 12 pro Leiste zwei Führungsbahnen vorgesehen, an die die Stirnseite des langen Schenkels 21 einerseits und die Flanken des kurzen Schenkel 22 andererseits zur Anlage kommen.

Die beweglichen Elemente 20 sichern folglich das Einstellkegelzahnrad 11 gegen ein axiales Verschieben und gewährleisten eine konkrete Zuordnung der sich kämmenden Verzahnungen des Einstellkegelzahnrads 11 und des Antriebskegelzahnrads 10 ohne jeden weiteren Arbeitsgang und ohne weitere Sicherungsmaßnahmen.

Das Antriebskegelzahnrad 10 hat eine Verzahnung, die zum an das Antriebskegelzahnrad 10 koaxial angeformten Schraubteil 9 gerichtet ist. Auf der anderen Seite des Antriebskegelzahnrads 10 schließt sich koaxial ein Zapfen 28 an, der in einer Sackbohrung 35 des Gehäuses 12 gelagert ist. Ein im Durchmesser größerer Teil dieses Zapfens 28 geht über einen Konus 29 in ein im Durchmesser reduziertes Endstück 41 über. Die Sackbohrung 35 ist als der Zapfenform angepaßte Stufenbohrung ausgebildet, mit einem dem Konus 29 entsprechenden konischen Übergangsteil 30. Das Antriebskegelzahnrad 10 ist somit einerseits mit dem Schraubteil 9 in der Gewindebuchse 8 und andererseits mit den Zapfen 28 im Gehäuse 12 gelagert und hat mit gleicher Achse voneinander wegweisende Stützflächen. Zur axialen Sicherung läuft die der Verzahnung abgewandte Stirnseite am die Sackbohrung 35 umgebenden Gehäuse 12 an.

Zur axialen Sicherung stützt sich das Antriebskegelzahnrad 10 einerseits mit seiner Verzahnung am als Halteelement dienenden Einstellkegelzahnrad 11 und auf der anderen Seite am Gehäuse 12 ab.

Diese Anordnung führt auch dazu, daß das Einstellkegelzahnrad 11 und das Antriebskegelzahnrad 10 selbsthemmend sind. Mittels des Winkelgetriebes ist das Betätigungselement 3 axial bewegbar.

Für diese Axialbewegung des Betätigungselements 3 ist im Gehäuse 12 eine Führung vorgesehen. Dazu weist das Betätigungselement 3 beiderseits seiner Längserstreckung je ein Tragteil auf, an dem auf der einen Seite parallel zur Achse 27 des Schraubteils 9 liegend, je eine Führungsfläche 31 und auf der dieser gegenüberliegenden Seite je eine Blattfeder 32 vorgesehen sind. Die Blattfedern 32 und die Führungsflächen 31 gleiten in im Gehäuse eingeformte Führungsbahnen 33, die parallel zur Achse 27 verlaufen und durch ein U-förmiges Profil 34 gebildet sind. Die Blattfedern 32 sind dabei vorteilhaft am Betätigungselement 3 angeformt und bilden im Schnitt eine linsenförmig oder ovale Kontur.

Die Ein- und Verstellung des Reflektors 1 erfolgt folgendermaßen. Bei der Montage wird der Reflektor 1 samt Betätigungselement 3 und Antriebskegelzahnrad 10 eingesetzt und danach das Einstellkegelzahnrad 11 in die Bohrung 13 eingedrückt und damit die Lage des Antriebskegelzahnrads 10 mit Schraubteil 9 axial fixiert. Danach wird mit einem geeigneten Werkzeug am Außensechskant 14 angesetzt und gedreht. Diese Drehung des Einstellkegelzahnrads 11 überträgt sich auf das Antriebskegelzahnrad 10 und über dessen Schraubteil 9 auf das Betätigungselement 3 und den Reflektor 1. Durch die axiale Fixierung des Antriebskegelzahnrads 10 kann dieses Zug- und Druckkräfte aufnehmen und damit über das Schraubteil 9 das geführte und gegen Verdrehen gesicherte, mit dem Reflektor 1 gelenkig verbundene Betätigungselement 3 verstellen.

**Patentansprüche**

1. Scheinwerfer mit einem Reflektor (1), wobei der Scheinwerfer in einer Karosserie eines Kraftfahrzeugs gelagert ist und mit einer Einstellvorrichtung (2) für die Lage des Reflektors in bezug auf die Karosserie, wobei die Einstellvorrichtung (2) ein Betätigungselement (3) hat, das wenigstens mittelbar mit dem Reflektor (1) verbunden ist und das von einem Winkelgetriebe (10, 11) verstellbar ist, wobei das Winkelgetriebe ein Antriebskegelzahnrad (10) hat, das über ein Gewinde mit dem Betätigungselement verbunden ist und das in einem das Winkelgetriebe aufnehmenden Gehäuse (12) mit einem Zapfen in einer Sackbohrung (35) radial gelagert ist und durch ein Halteelement (11), das in axialer Richtung am Antriebskegelzahnrad angreift, gegen Verschieben gesichert ist und das Antriebskegelzahnrad mit einem Einstellkegelzahnrad (11) zusammenwirkt, das in einer Bohrung im Gehäuse radial gelagert ist und dessen axiale Sicherung durch ein in eine Ringnut (18) des Einstellkegelzahnrads eingreifendes Element (20) erfolgt und das Einstellkegelzahnrad (11) mit einer von außerhalb zugänglichen Verdreheinrichtung (14) versehen ist, dadurch gekennzeichnet, daß das Einstellkegelzahnrad (11) durch wenigstens ein bewegliches, in die Ringnut (18) einbringbares Element (20) gesichert ist, das im Gehäuse (12) gehalten ist.

2. Scheinwerfer nach Anspruch 1, dadurch gekennzeichnet, daß das Antriebskegelzahnrad (10) mit einer Verzahnung versehen ist, die dem Zapfen (28) abgewandt angeordnet ist und als Halteelement das Einstellkegelzahnrad (11) in diese Verzahnung eingreift.

3. Scheinwerfer nach Anspruch 1 oder 2, dadurch gekennzeichnet, daß das bewegliche Element (20) eine in das Gehäuse (12) einschiebbare Leiste ist.

4. Scheinwerfer nach Anspruch 3, dadurch gekennzeichnet, daß die Leiste federnd ausgebildet ist.

5. Scheinwerfer nach Anspruch 3 oder 4, dadurch gekennzeichnet, daß in die Ringnut (18) zwei als Leisten ausgebildete bewegliche Elemente (20) eingreifen und daß die Leisten mit dem Betätigungselement (3) verbunden sind und parallel zur Achse des Antriebskegelzahnrades (10) angeordnet sind.

6. Scheinwerfer nach Anspruch 4 und 5, dadurch gekennzeichnet, daß das Einstellkegelzahnrad (11) vorzugsweise in ein einer rechtwinklig zu den beweglichen Elementen (20) verlaufenden Einschubrichtung zwischen die beweglichen Elemente (20) einschnappbar ist.

7. Scheinwerfer nach Anspruch 6, dadurch gekennzeichnet, daß die beweglichen Elemente (20) im Querschnitt einen langen Schenkel (21) und einen kurzen in die Ringnut (18) eingreifenden Schenkel (22) aufweisen und der kurze Schenkel (22) mit einer zum Einstellkegelzahnrad (11) weisenden Fase (23) versehen ist.

8. Scheinwerfer nach Anspruch 7, dadurch gekennzeichnet, daß die Fase (23) parallel zum Kegelwinkel des Einstellkegelzahnrads (11) verläuft.

9. Scheinwerfer nach Anspruch 8, dadurch gekennzeichnet, daß das Betätigungselement (3) Führungsflächen (31) aufweist in Form von Blattfedern (32), die an entsprechenden Führungsbahnen (33) des Gehäuses (12) zur Anlage kommen.

10. Scheinwerfer nach Anspruch 9, dadurch gekennzeichnet, daß das Gehäuse (12) an einem den Scheinwerfer aufnehmenden Gehäuse angeformt ist.

11. Scheinwerfer mit einem Reflektor (1), wobei der Scheinwerfer in einer Karosserie eines Kraftfahrzeugs gelagert ist und mit einer Einstellvorrichtung (2) für die Lage des Reflektors in bezug auf die Karosserie, wobei die Einstellvorrichtung ein Betätigungselement (3) hat, das wenigstens mittelbar mit dem Reflektor verbunden ist und das von einem Winkelgetriebe (10, 11) verstellbar ist, wobei das Winkelgetriebe ein Antriebskegelzahnrad hat, das über ein Gewinde (8) mit dem Betätigungselement verbunden ist und das in einem das Winkelgetriebe aufnehmenden Gehäuse (12) mit einem Zapfen in einer Sackbohrung (35) radial gelagert ist und durch ein Halteelement (11), das in axialer Richtung am Antriebskegelzahnrad eingreift, gegen Verschieben gesichert ist und das Antriebskegelzahnrad mit einem Einstellkegelzahnrad (11) zusammenwirkt, das in einer Bohrung im Gehäuse radial gelagert ist und dessen axiale Sicherung durch ein in eine Ringnut (18) des Einstellkegelzahnrads eingreifendes Element (20) erfolgt und das Einstellkegelzahnrad mit einer von außerhalb zugänglichen Verdreheinrichtung versehen ist, dadurch gekennzeichnet, daß das Antriebskegelzahnrad (10) mit einer Verzahnung versehen ist, die dem Zapfen (28) abgewandt angeordnet ist und als Halteelement das Einstellkegelzahnrad (11) in die Verzahnung eingreift.

## Claims

1. Headlamp having a reflector (1), the headlamp being supported in a motor vehicle body and having an adjusting device (2) for the position of the reflector with respect to the motor vehicle body, the adjusting device (2) having an operating element (3) which is connected, at least indirectly, to the reflector (1) and which can be set by a mitre gearing (10, 11), the mitre gearing having a drive bevel gear (10) which is connected via a screw thread to the operating element and which is supported radially in a casing (12), holding the mitre gearing, having a spigot in a blind borehole (35), and is secured against displacement by a retaining element (11) which acts on the drive bevel gear in the axial direction, and the drive bevel gear interacts with an adjusting bevel gear (11) which is supported radially in a borehole in the casing and whose axial security results from an element (20) engaging in an annular slot (18) of the adjusting bevel gear (11), and the adjusting bevel gear (11) being provided with a turning apparatus (14), accessible from the exterior, characterised in that the adjusting bevel gear (11) is secured by at least one moving element (20) which can be introduced into the annular slot (18) and is held in the casing (12).

2. Headlamp according to Claim 1, characterised in that the drive bevel gear (10) is provided with a gear tooth system which is arranged remote from the spigot (28) and the adjusting bevel gear (11) engages in this gear tooth system as a retaining element.

3. Headlamp according to Claim 1 or 2, characterised in that the moving element (20) is a bar which can be pushed into the casing (12).

4. Headlamp according to Claim 3, characterised in that the bar is configured in a sprung manner.

5. Headlamp according to Claim 3 or 4, characterised in that two moving elements (20), configured as bars, engage in the annular slot (18), and in that the bars are connected to the operating element (3) and are arranged parallel to the axis of the drive bevel gear (10).

6. Headlamp according to Claims 4 and 5, characterised in that the adjusting bevel gear can preferably be snapped in place between the moving elements (20), in a (sic) a push-in direction running at right angles to the moving elements (20).

7. Headlamp according to Claim 6, characterised in that the moving elements (20) in cross-section exhibit a long leg (21) and a short leg (22), engaging the annular slot (18), and the short leg (22) is provided with a chamfer (23) directed towards the adjusting bevel gear (11).

8. Headlamp according to Claim 7, characterised in that the chamfer (23) runs parallel to the bevel angle of the adjusting bevel gear (11).

9. Headlamp according to Claim 8, characterised in that the operating element (3) exhibits guide surfaces (31) in the form of leaf springs (32), which rest against associated guideways (33) of the casing (12).

10. Headlamp according to Claim 9, characterised in that the casing (12) is formed on a casing accommodating the headlamp.

11. Headlamp having a reflector (1), the headlamp being supported in a motor vehicle body and having an adjusting device (2) for the position of the reflector with respect to the motor vehicle body, the adjusting device having an operating element (3) which is connected, at least indirectly, to the reflector and which can be set by a mitre gearing (10, 11), the mitre gearing having a drive bevel gear which is connected via a screw thread (8) to the operating element and which is supported radially in a casing (12), holding the mitre gearing, having a spigot in a blind borehole (35), and is secured against displacement by a retaining element (11) which acts on the drive bevel gear in the axial direction, and the drive bevel gear interacts with an adjusting bevel gear (11) which is supported radially in a borehole in the casing and whose axial security results from an element (20) engaging in an annular slot (18) of the adjusting bevel gear, and the adjusting bevel gear being provided with a turning apparatus (14), accessible from the exterior, characterised in that the drive bevel gear (10) is provided with a gear tooth system which is arranged remote from the spigot (28) and the adjusting bevel gear (11) engages in the gear tooth system as a retaining element.

## Revendications

1. Phare comprenant un réflecteur (1), le phare étant monté dans une carrosserie de véhicule et un dispositif de réglage (2) pour positionner le réflecteur par rapport à la carrosserie, le dispositif de réglage (2) ayant un élément de commande (3), qui est relié au moins indirectement au réflecteur (1) et qui peut être ajusté par un engrenage angulaire (10, 11), l'engrenage angulaire ayant un pignon conique de commande (10) qui est relié par un filetage à l'élément de commande et qui est monté radialement dans un boîtier (12) recevant l'engrenage angulaire, par un pivot monté dans un alésage borgne (35) et qui est assuré contre un déplacement par un élément de retenue (11) engrénant en direction axiale sur le pignon conique de commande et le pignon conique de commande coopérant avec un pignon conique de réglage (11), qui est monté radialement dans un alésage du boîtier et dont la sécurité axiale est réalisée par un élément (20) s'insérant dans une gorge annulaire (18) du pignon conique de réglage et le pignon conique de réglage (11) étant muni d'un dispositif de rotation (14) accessible de l'extérieur, phare caractérisé en ce que le pignon conique de réglage (11) est assuré au moins par un élément (20) mobile, insérable dans la gorge annulaire (18), élément maintenu dans le boîtier (12).

2. Phare selon la revendication 1, caractérisé en ce que le pignon conique de commande (10) est muni d'une denture, qui est située à l'opposé du pivot (28) et en ce que le pignon conique de réglage (11) en tant qu'élément de retenue engrène dans cette denture.

3. Phare selon la revendication 1 ou la revendication 2, caractérisé en ce que l'élément mobile (20) est un doigt intercalable dans le boîtier (12).

4. Phare selon la revendication 3, caractérisé en ce que le doigt est réalisé à ressorts.

5. Phare selon la revendication 3 ou la revendication 4, caractérisé en ce que deux éléments mobiles (20) réalisés sous la forme de doigts de guidage sont insérés dans la gorge annulaire (18) et en ce que les doigts sont liés à l'élément de commande (3) et sont disposés parallèlement par rapport à l'axe du pignon conique de commande (10).

6. Phare selon les revendications 4 et 5, caractérisé en ce que le pignon conique de réglage (11) peut être encliqueté entre les éléments mobiles (20) de préférence dans une direction d'insertion se développant à angle droit par rapport aux éléments mobiles (20).

7. Phare selon la revendication 6, caractérisé en ce que les éléments mobiles (20) comportent en coupe une branche longue (21) et une branche courte (22) s'insérant dans la gorge annulaire (18) et la branche courte (22) est munie d'un chanfrein (23) se présentant en direction du pignon conique de réglage (11).

8. Phare selon la revendication 7, caractérisé en ce que le chanfrein (23) se développe parallèlement à l'angle conique du pignon conique de réglage (11).

9. Phare selon la revendication 8, caractérisé en ce que l'élément de commande (3) comporte des surfaces de guidage (31) sous forme de ressort à lames (32), qui viennent en contact avec les glissières (33) correspondantes du boîtier (12).

10. Phare selon la revendication 9, caractérisé en ce que le boîtier (12) est façonné comme un boîtier pouvant recevoir le phare.

11. Phare comprenant un réflecteur (1), le phare étant monté dans une carrosserie de véhicule et un dispositif de réglage (2) pour positionner le réflecteur par rapport à la carrosserie, le dispositif de réglage (2) ayant un élément de commande (3), qui est relié au moins indirectement avec le réflecteur (1) et qui peut être ajusté par un engrenage angulaire (10, 11), l'engrenage angulaire ayant un pignon conique de commande (10) qui est relié par un filetage (8) à l'élément de commande et qui est monté radialement dans un boîtier (12) recevant l'engrenage angulaire, par un pivot introduit dans un alésage borgne (35) et qui est assuré contre un déplacement par un élément de retenue (11) engrénant en direction axiale sur le pignon conique de commande et le pignon conique de commande coopérant avec un pignon conique de réglage (11), qui est monté radialement dans un alésage du boîtier et dont la fixation axiale est réalisée par un élément (20) s'insérant dans une gorge annulaire (18) du pignon conique de réglage et le pignon conique de réglage (11) étant muni d'un dispositif de rotation (14) accessible de l'extérieur, phare caractérisé en ce que le pignon conique de commande (10) est muni d'une denture, qui est placée à l'opposé du pivot (28) et en ce que le pignon conique de réglage (11) engrène dans la denture comme élément de retenue.

# FIG. 1

# FIG. 2

# FIG.3